# EUROPÄISCHE PATENTSCHRIFT

(11) **EP 1 081 024 B1**
(45) Veröffentlichungstag und Bekanntmachung des Hinweises auf die Patenterteilung: **11.08.2004**
(21) Anmeldenummer: 00117695.7
(22) Anmeldetag: 17.08.2000
(51) Int. Cl.: B62D 25/08

(54) **Fahrzeugvorderbau mit einem Wasserkasten**
Front structure of a vehicle in the cowl area
Structure avant de véhicule dans la région de l'auvent

(30) Priorität: 28.08.1999 DE 19940986
(43) Veröffentlichungstag der Anmeldung: 07.03.2001
(73) Patentinhaber: ADAM OPEL AG, 65423 Rüsselsheim (DE)
(72) Erfinder: Schädel, Georg, 65428 Rüsselsheim (DE); Mildner, Udo, Dipl.-Ing. (FH), 65550 Limburg (DE)
(74) Vertreter: Daniel, Ulrich W.P.

(56) Entgegenhaltungen:
- EP-A- 0 494 562
- EP-A- 0 694 465
- WO-A-98/30418
- DE-A- 19 632 714
- US-A- 4 068 884

## Beschreibung

Die Erfindung bezieht sich auf einen Fahrzeugvorderbau mit zwei seitlich angeordneten Längsträgern, an deren Außenseiten jeweils ein Radhaus mit einer Federbeinaufnahme für das Federbein einer Radaufhängung verbunden ist, und zwei Seitenwänden, die die seitliche Begrenzung eines Motorraums bilden, und einer Stirnwand, die den Motorraum von der Fahrgastzelle trennt, sowie einer Schottwand, die vor der Stirnwand angeordnet ist und die sich von einem zum anderen Radhaus erstreckt, so dass zwischen Stirnwand und Schottwand ein Wasserkasten entsteht.

Ein Fahrzeug mit einem derartigen Vorderbau ist z. B. in der DE 196 32 714 A1 beschrieben. Mit Wasserkasten bezeichnet man eine Abtrennung vom Motorraum durch eine quer vor der Stirnwand verlaufende Schottwand. Dort können Aggregate untergebracht werden, die in besondere Weise geschützt sein müssen. Hierbei handelt es sich beispielsweise um:
ein Bremsgerät mit Betätigungselementen,
Komponenten einer Heizungs- und Belüftungs- bzw. Klimaanlage und
Komponenten einer Scheibenwischeranlage.

Die Schottwand erstreckt sich im allgemeinen vom linken zum rechten Radkasten und wird dort mit an den Radkästen und den Federbeinaufnahmen befestigten Flansche verschweißt.

In der DE 38 20 644 C2 wird vorgeschlagen, die Seitenabschnitte der Schottwand so zu gestalten, dass sie unmittelbar an den Seitenwänden der Karosserie bzw. der Federbeinaufnahme befestigt werden können. Nachteilig bei einer derartigen Eingliederung der Schottwand ist es, dass durch die Anbindung an die Federbeinaufnahme zusätzliche Montageschritte erforderlich sind. Darüber hinaus kann dies zu einer Schwächung in diesem Bereich führen.

Die Erfindung beruht daher auf der Aufgabe, die Einbindung der Schottwand so zu gestalten, dass diese einerseits leicht zu montieren ist und andererseits eine zusätzliche Verstärkung des Vorderbaus erzielt wird.

Dazu schlägt die Erfindung vor, dass die Schottwand dreiteilig ausgeführt ist, nämlich aus einem mittleren Hauptteil und zwei Seitenteilen besteht, wobei diese jeweils einstückig mit einer hinteren Wand des Radhauses ausgeführt sind.

Auf diese Weise wird jedes Seitenteil zum integralen Bestandteil des Radhauses, so dass damit das Ziel erreicht ist, dass keine zusätzlichen Schweißoperationen notwendig sind. Darüber hinaus wird durch die Eingliederung der Seitenteile in das Radhaus eine bessere, die Struktur des Vorderbaus nicht belastende Anbindung erreicht.

Um den Vorderbau zu verstärken, wird weiterhin vorgeschlagen, dass jeder Längsträger sich im Bereich der Federbeinaufnahme teilt, wobei ein unterer Arm unter die Schottwand und weiter unter das Bodenblech der Fahrgastzelle und der obere Arm durch die Schottwand an der Federbeinaufnahme entlang zur Seitenwand des Vorderbaus geführt wird, wobei dieser Arm zwischen dem jeweiligen Seitenteil und dem Hauptteil hindurchläuft. Der obere Arm verläuft dabei an der dem Wasserkasten zugewandten Seite der Federbeinaufnahme nach außen und ist dort mit dem Seitenteil bzw. dem Radhausblech verschweißt.

Darüber hinaus ist jedes Seitenteil mit der jeweiligen Federbeinaufnahme verschweißt. Außerdem wird der Hauptteil der Schottwand an der Unterkante mit der Stirnwand verschweißt, so dass der Wasserkasten nach unten geschlossen ist.

Die Erfindung soll im folgenden anhand eines Ausführungsbeispiels näher erläutert werden. Dazu zeigen:
- Fig. 1:: eine Schottwand,
- Fig. 2:: einen Schnitt entlang der Linie II - II der Fig. 1, der die Anbindung an ein Radhaus verdeutlicht und
- Fig. 3:: eine perspektivische Darstellung des linken Radhauses.

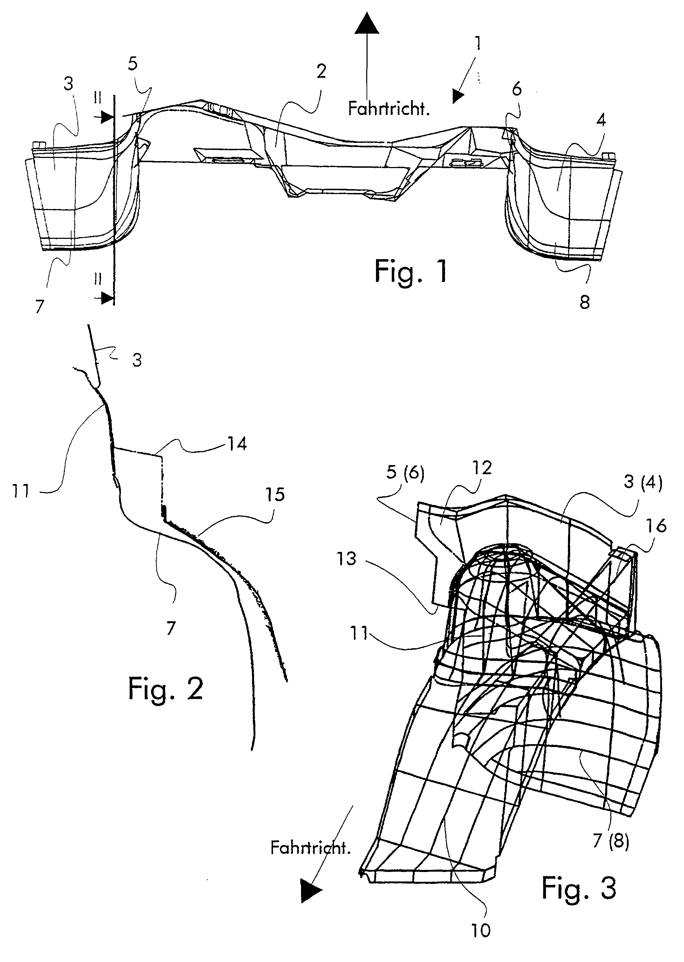

Zunächst wird auf die Fig. 1 Bezug genommen. Diese zeigt die Schottwand 1 von oben, wobei der Pfeil die Fahrtrichtung angibt. Diese Schottwand 1 besteht aus einem mittleren Hauptteil 2 und zwei Seitenteilen 3, 4, die jeweils entlang einer Stoßlinie 5, 6 mit dem Hauptteil 2 verbunden sind. Die beiden Seitenteile 3, 4 setzen sich einstückig nach unten jeweils in ein Radhausblech 7, 8 fort, das die hintere Wand eines Radhauses für ein Vorderrad bildet, was in der Schnittdarstellung der Fig. 2 gut zu erkennen ist. Deutlich wird dies auch in der Fig. 3, die das linke Radhaus mit dem hinteren Radhausblech 7 und das linke Seitenteil 3 der Schottwand 1 zeigt. Das rechte Radhaus ist spiegelbildlich dazu aufgebaut.

Ein solches Radhaus besteht aus einem vorderen Radhausblech 10 und dem hinteren Radhausblech 7 (bzw. 8), das an seinem oberen Ende mit einer Federbeinaufnahme, auch Federbeindom 11 genannt, verbunden ist. Das vordere 10 und das hintere Radhausblech 7 und der Federbeindom 11 umschließen halbkuppelförmig einen Raum zur Aufnahme eines Vorderrades, das über ein Federbein mit der Karosserie verbunden ist, dessen oberes Ende im Federbeindom 11 befestigt ist. Im vorliegenden Fall ist das hintere Radhausblech 7 (bzw. 8) einstückig mit dem Seitenteil 3 (bzw. 4) der Schottwand 1 verbunden, das sich an der rückwärtigen Seite des Federbeindoms 11 vorbei zur Seitenwand 16 des Vorderbaus 1 erstreckt. Ein flanschartiger Fortsatz 12 dient der Befestigung des Hauptteils 2 der Schottwand 1. Unterhalb des flanschartigen Abschnittes befindet sich eine Ausnehmung 13 für die Durchführung des oberen Arms eines Längsträgers 14.

Die prinzipielle Anordnung wird noch einmal deutlich in der Schnittdarstellung der Fig. 2. Diese zeigt das eine hintere Radhausblech 7, das nach oben einstückig an das eine Seitenteil 3 anschließt. Das Seitenteil 3 läuft dabei am Federbeindom 11 entlang und ist dort mit diesem verschweißt. Die Darstellung zeigt weiterhin den oberen Arm eines Längsträgers 14, der sich auf der Wasserkastenseite des Seitenteils 3 um den Federbeindom 11 herum zur A-Säule bzw. zur Seitenwand des Vorderbaus geführt ist. Mit diesem Längsträger 14 sind Teile der Stirnwand 15 verbunden, die den Wasserkasten von der Fahrgastzelle abtrennt.

Insgesamt ermöglicht diese Anordnung, dass die Seitenteile 3, 4 zusammen mit der Seitenwand 16 des Vorderbaus und dem Radhaus vormontiert werden können. Der Hauptteil 2 der Schottwand 1 ist Bestandteil einer weiteren Vormontageeinheit bestehend im wesentlichen aus den Längsträgern 14 und der Stirnwand 15 sowie dem Hauptteil 2 der Schottwand 1. Diese beiden Vormontageeinheiten werden zusammengeführt, wobei unter anderem eine Schweißverbindung zwischen den Seitenteilen 3, 4 und dem Hauptteil 1 entlang der Stoßlinien 5, 6 hergestellt wird. Damit ergibt sich insgesamt eine einfache Montage. Durch die einstückige Ausführung der Seitenteile 3, 4 mit dem jeweiligen hinteren Radhausblech 7, 8 ist eine hohe Festigkeit gegeben.

## Patentansprüche

1. Fahrzeugvorderbau mit zwei seitlich angeordneten Längsträgern, an deren Außenseiten jeweils ein Radhaus mit einer Federbeinaufnahme für das Federbein einer Radaufhängung verbunden ist, und zwei Seitenwänden, die die seitliche Begrenzung eines Motorraums bilden, und einer Stirnwand, die den Motorraum von der Fahrgastzelle trennt, sowie einer Schottwand, die vor der Stirnwand angeordnet ist und die sich von einem zum anderen Radhaus erstreckt, so dass zwischen Stirnwand und Schottwand ein Wasserkasten entsteht, **dadurch gekennzeichnet, dass** die Schottwand (1) dreiteilig ausgeführt ist, nämlich aus einem mittleren Hauptteil (2) und zwei Seitenteilen (3, 4) besteht, wobei die Seitenteile (3, 4) einstückig mit einer hinteren Wand (7, 8) des Radhauses ausgeführt sind.

2. Fahrzeugvorderbau nach Anspruch 1, **dadurch gekennzeichnet, dass** jeder Längsträger (14) sich im Bereich der Federbeinaufnahme (11) in zwei Arme aufteilt, wobei jeweils der untere Arm unter die Schottwand (1) geführt ist und der obere Arm durch eine Ausnehmung (13) in der Schottwand (1) an der Stoßlinie (5, 6) zwischen Hauptteil (2) und dem jeweiligen Seitenteil (3, 4) hindurchgeführt ist.

3. Fahrzeugvorderbau nach Anspruch 2, **dadurch gekennzeichnet, dass** ein Abschnitt des oberen Arms des Längsträger (14) in Fahrtrichtung gesehen vor der Federbeinaufnahme (11) nach außen geführt ist und an das Seitenteil (3, 4) angeschweißt ist.

4. Fahrzeugvorderbau nach Anspruch 3, **dadurch gekennzeichnet, dass** jede Federbeinaufnahme (11) mit dem jeweiligen Seitenteil (3, 4) verschweißt ist.

5. Fahrzeugvorderbau nach einem der vorhergehenden Ansprüche, **dadurch gekennzeichnet, dass** die Unterkante der Schottwand (1) mit der Stirnwand (15) verschweißt ist, so dass der Wasserkasten nach unten geschlossen ist.

## Claims

1. Front part of vehicle, with two laterally arranged longitudinal members, on each of the outer sides of which a wheel arch is connected to a telescopic strut seat for the telescopic strut of a wheel suspension, and with two side walls which form the lateral boundary of an engine compartment, and a dashboard which separates the engine compartment from the passenger compartment, as well as a bulkhead which is arranged in front of the dashboard and which extends from one wheel arch to the other so that between dashboard and bulkhead a radiator tank is formed, **characterised in that** the bulkhead (1) is constructed in three portions, namely consists of a central main portion (2) and two side portions (3, 4), wherein the side portions (3, 4) are constructed in one piece with a rear wall (7, 8) of the wheel arch.

2. Front part of vehicle according to claim 1, **characterised in that** each longitudinal member (14) is divided in the region of the telescopic strut seat (11) into two arms, wherein the lower arm is passed under the bulkhead (1) and the upper arm is passed through a recess (13) in the bulkhead (1) at the joining line (5, 6) between the main portion (2) and the respective side portion (3, 4).

3. Front part of vehicle according to claim 2, **characterised in that** a section of the upper arm of the longitudinal member (14) is passed to the outside in front of the telescopic strut seat (11) as seen in the direction of travel and welded to the side portion (3, 4).

4. Front part of vehicle according to claim 3, **characterised in that** each telescopic strut seat (11) is welded to the respective side portion (3, 4).

5. Front part of vehicle according to any of the preceding claims, **characterised in that** the lower edge of the bulkhead (1) is welded to the dashboard (15), so that the radiator tank is closed at the bottom.

## Revendications

1. Structure avant de véhicule avec deux longerons latéraux à l'extérieur desquels un passage de roue est relié à un logement de jambe de force à ressort d'une suspension de roue, et deux parois latérales qui constituent la limitation latérale d'un logement de moteur, et une paroi frontale qui sépare le logement du moteur de l'habitacle, ainsi qu'une cloison étanche disposée devant la paroi frontale et qui s'étend d'un passage de roue à l'autre, de façon à ce qu'entre la paroi frontale et la cloison étanche un compartiment étanche à l'eau soit obtenu, **caractérisée en ce que** la cloison étanche (1) soit constituée de trois parties, à savoir d'une partie principale centrale (2) et de deux parties latérales (3, 4), moyennant quoi les parties latérales (3, 4) sont réalisées d'une seule pièce avec une paroi arrière (7, 8) du passage de roue.

2. Structure avant de véhicule selon la revendication 1, **caractérisée en ce que** chaque longeron (14) se divise au niveau du logement de la jambe de force à ressort (11) en deux bras, moyennant quoi le bras inférieur est guidé sous la cloison étanche (1) et le bras supérieur est guidé à travers un évidement (13) dans la cloison étanche (1) le long de la ligne de jonction (5, 6) entre la partie principale (2) et la partie latérale (3, 4) correspondante.

3. Structure avant de véhicule selon la revendication 2, **caractérisée en ce qu'**une partie du bras supérieur du longeron (14) est guidé vers l'extérieur avant le logement de la jambe de force à ressort (11), dans le sens de la marche, et soudée sur la partie latérale (3, 4).

4. Structure avant de véhicule selon la revendication 3, **caractérisée en ce que** chaque logement de jambe de force à ressort (11) est soudé à la partie latérale (3, 4) correspondante.

5. Structure avant de véhicule selon l'une des revendications précédentes, **caractérisée en ce que** le bord inférieur de la cloison étanche (1) est soudé à la paroi frontale (15), de façon à ce que la boîte à eau soit fermée vers le bas.
